# EUROPEAN PATENT APPLICATION

(11) **EP 4 752 908 A1**
(43) Date of publication of application: **03.06.2026**
(21) Application number: 25785556.9
(22) Date of filing: 14.03.2025
(51) Int. Cl.: G21C 17/003

(54) **REACTOR PRESSURE VESSEL INSPECTION APPARATUS AND REACTOR PRESSURE VESSEL INSPECTION METHOD**

(30) Priority: 12.11.2024 CN 202411616348
(71) Applicant: CGN Inspection Technology Co., Ltd., Shenzhen, Guangdong 518000 (CN); Suzhou Nuclear Power Research Institute Co., Ltd., Suzhou, Jiangsu 215004 (CN)
(72) Inventor: WU, Jianrong, Shenzhen, Guangdong 518000 (CN); YE, Xin, Shenzhen, Guangdong 518000 (CN); MA, Guanbing, Shenzhen, Guangdong 518000 (CN); ZHAO, Yue, Shenzhen, Guangdong 518000 (CN); HONG, Maocheng, Shenzhen, Guangdong 518000 (CN); ZENG, Chenming, Shenzhen, Guangdong 518000 (CN); YANG, Qianfei, Shenzhen, Guangdong 518000 (CN); XU, Junlong, Shenzhen, Guangdong 518000 (CN); MA, Chao, Shenzhen, Guangdong 518000 (CN); GUO, Wanglei, Shenzhen, Guangdong 518000 (CN); HU, Yuqi, Shenzhen, Guangdong 518000 (CN); WANG, Tao, Shenzhen, Guangdong 518000 (CN); LIU, Chao, Shenzhen, Guangdong 518000 (CN); ZHANG, Yang, Shenzhen, Guangdong 518000 (CN); LI, Jie, Shenzhen, Guangdong 518000 (CN)
(74) Representative: Westphal, Mussgnug & Partner, Patentanwälte mbB
(86) International application number: PCT/CN2025/082675
(87) International publication number: WO 2025/214076

(57) **Abstract**

A reactor pressure vessel inspection apparatus and a reactor pressure vessel inspection method. The reactor pressure vessel inspection apparatus comprises a support frame body (10), a lifting mechanism (20) mounted on the support frame body (10), a rotating mechanism (30) mounted on the lower part of the lifting mechanism (20) facing a cylinder, and a nozzle scanning arm (40) and two multi-degree-of-freedom robotic arm probe holders (50), which are mounted below the rotating mechanism (30), wherein the lifting mechanism (20) can move relative to the support frame body (10) to drive the rotating mechanism (30) and the nozzle scanning arm (40) and the multi-degree-of-freedom robotic arm probe holders (50), which are arranged on the rotating mechanism (30), to move up and down along the central axis of the cylinder, and the rotating mechanism (30) drives the rotation of the nozzle scanning arm (40) and the multi-degree-of-freedom robotic arm probe holders (50), which are arranged on the rotating mechanism (30).

## Description

### TECHNICAL FIELD

The present invention relates to the technical field of in-service inspection for nuclear power equipment, and particularly relates to a reactor pressure vessel inspection equipment and a reactor pressure vessel inspection method.

### BACKGROUND

The most important component of a nuclear power plant is the reactor pressure vessel, located in the center of the reactor building. It is used to fix, support, and contain the reactor core and all internal components. The nuclear fuel of the internal reactor undergoes a chain fission reaction under neutron irradiation. The reactor pressure vessel is the only large component that cannot be replaced throughout the entire lifespan of a nuclear power plant. During normal operation, it withstands high temperature and pressure, as well as extremely strong radioactivity. To ensure the safety of nuclear reactor pressure vessels, it is necessary to conduct regular non-destructive testing to identify potential structural damage, assess their safety status, and determine whether remedial measures are required.

The in-service inspection specifications and inspection outlines for nuclear power plants stipulate mandatory requirements of non-destructive testing for welds, bolt holes, cladding, and base metal in the neutron high-flux region of the reactor pressure vessel. They also specify that pre-service inspections and in-service inspections of the reactor pressure vessel should be carried out before commissioning and at certain intervals during operation. The results of pre-service inspections and in-service inspections serve as important bases for analyzing and evaluating the operating status and life extension of pressure vessels. Even after the reactor is shut down, the reactor pressure vessel still has high levels of radioactivity due to the presence of activation products. It is impossible to conduct full-range, long-term manual inspection of the vessel by human labor at close range. Therefore, safe and reliable automated inspection equipment is an essential key element for the inspection of reactor pressure vessels. Furthermore, the inspection of reactor pressure vessels has always been a critical part of nuclear power plant overhauls, and the efficiency of the inspection is of paramount importance, directly affecting the overhaul schedule of nuclear power plants and the power generation efficiency of units.

There are several types of existing reactor pressure vessel inspection devices. The first type is a large inspection device with a fixed installation position on the reactor pressure vessel that can carry multiple probe holders. Due to the dispersed nature of the inspected locations, a single set of ultrasonic probe holders is often used to sequentially scan shell butt welds, bottom head butt welds, shell cladding, nozzle-to-shell welds, safe end welds, and nozzle inner radius areas of the reactor pressure vessel. The second type is a general-purpose robotic arm with multiple degrees of freedom. However, it has limited load capacity and requires multiple changes to the installation position of the robotic arm and replacement of the probe holder to complete the inspection of multiple positions on the reactor pressure vessel in sequence. This results in a high number of replacements and low inspection efficiency. The third type is a specialized inspection device designed for parts such as nozzles, flange faces, and shell welds. Each inspection device completes the inspection of one type of object to be inspected. The number of different types of equipment significantly increases the complexity of on-site installation, transportation, and use. The existing inspection devices mentioned above greatly limit the efficiency of reactor pressure vessel inspection and increase the workload of on-site operators and the risk of human error.

### SUMMARY OF THE INVENTION

The technical problem to be solved by the present invention is to provide a reactor pressure vessel inspection equipment and a reactor pressure vessel inspection method.

The technical solution adopted by the present invention to solve the above technical problem is to provide a reactor pressure vessel inspection equipment, including a support frame for arranging on the flange face of the shell of the pressure vessel, a lifting mechanism disposed on the support frame and coaxial with the shell, a rotating mechanism disposed on the lower part of the lifting mechanism facing the shell, a nozzle scanning arm and two multi-degree-of-freedom robotic arm probe holders disposed below the rotating mechanism;
The lifting mechanism is movable relative to the support frame, driving the rotating mechanism and the nozzle scanning arm and multi-degree-of-freedom robotic arm probe holder on it to move up and down along the central axis of the shell; the rotating mechanism is used to drive the nozzle scanning arm and multi-degree-of-freedom robotic arm probe holder to rotate around the central axis of the shell; the nozzle scanning arm and the two multi-degree-of-freedom robotic arm probe holders are used to perform synchronous parallel scanning to the shell.

In some embodiments, the support frame includes four support legs for standing upright on the flange surface of the shell, and a connecting bracket connected between the four support legs and capable of spanning above the flange surface of the shell;
The four support legs are distributed at intervals circumferentially along the flange surface, wherein the two support legs located at diagonal positions are respectively used to cooperate with guide columns on the flange surface.

In some embodiments, the lifting mechanism includes a lifting column that is perpendicular to the connecting bracket and passes through the connecting bracket;
The two ends of the lifting column are located on the upper and lower sides of the connecting bracket, respectively; the rotating mechanism is disposed on the lower end of the lifting column located on the lower side of the connecting bracket; the lower end of the lifting column is retractable, which drives the rotating mechanism to move up and down.

In some embodiments, the rotating mechanism includes a support plate, a hollow cable carrier, a torque motor with an absolute encoder, a connecting shell, and a rotating disk;
The cable carrier and the connecting shell are connected to opposite sides of the support plate, and the support plate is provided with a through hole to connect the cable carrier and the connecting shell; the end of the cable carrier away from the support plate is fixedly connected to the lifting column; the rotating disk is sleeved on the outer periphery of the connecting shell and can rotate relative to the connecting shell; the torque motor is set on the support plate, connected to and driving the rotating disk to rotate; and
The rotating disk is provided with a number of mounting holes distributed at intervals, respectively used for mounting the nozzle scanning arm and the multi-degree-of-freedom robotic arm probe holder under the rotating disk.

In some embodiments, at least one side of the cable carrier is provided with a cable hole communicating with its internal space;
The support plate is provided with a connection unit integrating a number of connectors; connecting cables of the nozzle scanning arm and the multi-degree-of-freedom robotic arm probe holders pass through the cable carrier and are connected to the connectors of the connection unit.

In some embodiments, the reactor pressure vessel inspection equipment further includes a cable winding and unwinding winch disposed on the lifting mechanism, the lifting end of the cable winding and unwinding winch is provided with a cable rack for suspending the cable, the connecting cable used for external connection is suspended on the cable rack, with one end connected to the connector of the connecting unit, and the other end used for external connection to the control system.

In some embodiments, the multi-degree-of-freedom robotic arm probe holder includes a six-degree-of-freedom robotic arm and a probe holder;
The six-degree-of-freedom robotic arm is parallel to the central axis of the shell with its first joint and arranged below the rotating mechanism through a first quick-assembly structure; the probe holder is detachably arranged on the sixth joint of the six-degree-of-freedom robotic arm away from the rotating mechanism through a second quick-assembly structure.

In some embodiments, the first quick-assembly structure includes a positioning column disposed on the first joint of the six-degree-of-freedom robotic arm, a positioning hole adapted to the positioning column and disposed on the rotating mechanism, a positioning pin protruding on the first joint and located on at least one side of the positioning column, a pin hole disposed on the rotating mechanism and located on at least one side of the positioning hole, and a locking member; the positioning column is inserted and fitted into the positioning hole from one side of the positioning hole, while the positioning pin is fitted into the pin hole, and the locking member is inserted from another side of the positioning hole and fastened to the positioning column.

In some embodiments, the second quick-assembly structure includes a first connecting seat disposed on the sixth joint of the six-degree-of-freedom robotic arm, a second connecting seat disposed on the probe holder, and a mating assembly;
The first connecting seat is provided with a mating hole and a screw hole that are axially connected; one side of the second connecting seat is provided with a mating column that is adapted to the mating hole, and the second connecting seat is also provided with a central channel that penetrates through the mating column; the mating assembly is inserted through the central channel and can move and rotate axially relative to the central channel; the mating assembly includes a rotating operating part and a screw that are axially connected;
When the first connecting seat and the second connecting seat are mated, the mating column is fitted into the mating hole, and the mating assembly faces the screw hole by the screw, the screw is fitted into the screw hole by rotating the rotating operating part, thereby mating and fixing the first connecting seat and the second connecting seat.

In some embodiments, the probe holder includes a protective cover, a probe support, and a number of probe assemblies; each of the probe assemblies includes an ultrasonic probe with at least two degrees of freedom of motion;
One end of the protective cover is open, and the probe support fits inside the open end of the protective cover to close the open end; and the probe support is provided with a number of channel holes that penetrate through the opposite ends of the probe support and communicate with the internal space of the protective cover; one of the channel holes is used to insert one of the probe assemblies, and the probe assemblies can move back and forth along the channel hole relative to the protective cover and the probe support in the direction of entering and exiting the protective cover.

In some embodiments, each of the probe assemblies further includes a probe slide rod and a probe frame, the first end of the probe slide rod passes through one of the channel holes and moves back and forth along one of the channel holes; the probe frame is rotatably disposed on the second end of the probe slide rod, and the ultrasonic probe is disposed on the probe frame and rotatable relative to the probe frame; and/or,
In some embodiments, each of the probe assemblies also includes a constant force spring; the constant force spring is disposed at the first end of the probe slide rod and connected to the probe support, so that the probe slide rod has a constant tendency force to move outward in the direction of the protective cover.

The present invention further provides a reactor pressure vessel inspection method, employing the reactor pressure vessel inspection equipment as described above, and the reactor pressure vessel inspection method includes the following steps:
S1. arranging the reactor pressure vessel inspection equipment on the flange face of the shell of the pressure vessel;
S2. activating the lifting mechanism of the reactor pressure vessel inspection equipment, and lowering the nozzle scanning arm and the two multi-degree-of-freedom robotic arm probe holders to the position to be scanned inside the shell;
S3. the nozzle scanning arm and the two multi-degree-of-freedom robotic arm probe holders perform synchronous and parallel scanning;

Wherein the scanning positions of the nozzle scanning arm includes at least one of the following: the weld at the safe end of the water inlet nozzle, the weld at the safe end of the water outlet nozzle, the extended section of inner radius of the water inlet nozzle, the extended section of the inner radius of the water outlet nozzle, the nozzle side of the weld connecting water inlet nozzle and the shell, the nozzle side of the weld connecting water outlet nozzle and the shell, the cladding of the water inlet nozzle, the cladding of the water outlet nozzle, the inner radius of the water inlet nozzle, and the inner radius of the water outlet nozzle; and
The scanning positions of the multi-degree-of-freedom robotic arm probe holder includes at least one of the following: the shell side of the weld connecting water inlet nozzle and the shell, the shell side of the weld connecting water outlet nozzle and the shell, the inner radius of the water outlet nozzle, the bottom head girth weld and the core high-flux region.

The present invention has the following beneficial effects: by setting up two multi-degree-of-freedom robotic arm probe holders and a nozzle scanning arm to cooperate in scanning the reactor pressure vessel, the multi-degree-of-freedom robotic arm probe holders and the nozzle scanning arm can scan synchronously and in parallel, reducing scanning time, improving work efficiency, and greatly reducing the critical path time for nuclear power plant overhauls.

### BRIEF DESCRIPTION OF THE DRAWINGS

The present invention will be further described below in conjunction with accompanying drawings and embodiments. In the drawings,
FIG. 1 is a structural schematic diagram of the reactor pressure vessel inspection equipment according to an embodiment of the present invention;
FIG. 2 is a structural schematic diagram of the lifting mechanism and the rotating mechanism in the reactor pressure vessel inspection equipment according to an embodiment of the present invention;
FIG. 3 is a structural schematic diagram of the rotating mechanism in the reactor pressure vessel inspection equipment according to an embodiment of the present invention;
FIG. 4 is a cross-sectional structural schematic diagram of the rotating mechanism shown in FIG. 3;
FIG. 5 is a structural schematic diagram of the reactor pressure vessel inspection equipment after the support frame and the lifting mechanism have been removed according to an embodiment of the present invention;
FIG. 6 is a structural schematic diagram of the nozzle scanning arm in FIG. 5;
FIG. 7 is a structural schematic diagram of a multi-degree-of-freedom robotic arm probe holder in FIG. 5;
FIG. 8 is a structural schematic diagram (partial cross-section) of the cooperation between the multi-degree-of-freedom robotic arm probe holder and the rotating disk;
FIG. 9 is a structural schematic diagram of an embodiment of the probe holder in the multi-degree-of-freedom robotic arm probe holder of the present invention;
FIG. 10 is a structural schematic diagram of the probe holder shown in FIG. 9 after the protective cover has been removed;
FIG. 11 is a structural schematic diagram of a probe assembly shown in FIG. 10; and
FIG. 12 is a structural schematic diagram of the reactor pressure vessel inspection equipment according to an embodiment of the present invention in the shell (the support frame and the lifting mechanism are omitted).

### DESCRIPTION OF THE EMBODIMENTS

For a better understanding of the technical features, purposes and effects of the invention, the specific implementations of the invention are described in detail with reference to the accompanying drawings.

The reactor pressure vessel inspection equipment of the present invention is used to perform non-destructive testing on the welds, bolt holes, cladding, and base metal in the neutron high-flux region of the reactor pressure vessel.

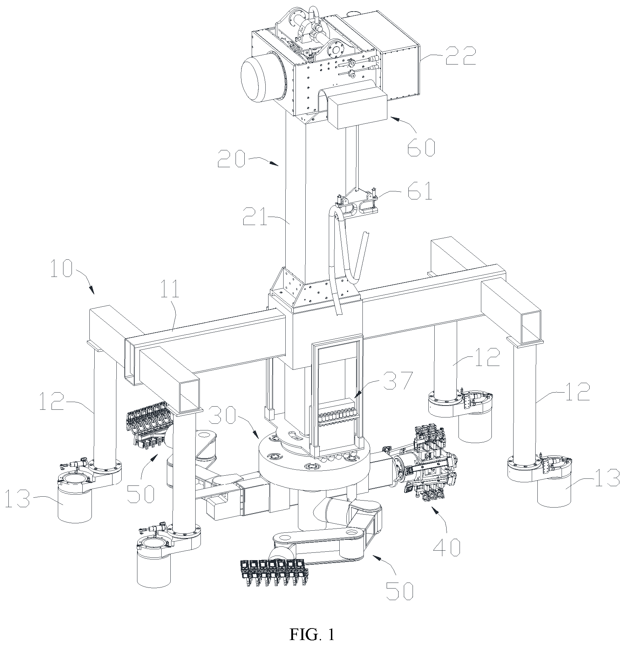

As shown in FIG. 1, a reactor pressure vessel inspection equipment according to an embodiment of the present invention may include a support frame 10, a lifting mechanism 20 disposed on the support frame 10, a rotating mechanism 30 disposed on the lifting mechanism 20, a nozzle scanning arm 40 and two multi-degree-of-freedom robotic arm probe holders 50 disposed on the rotating mechanism 30.

The support frame 10 is used to arrange on the flange face of the shell of the reactor pressure vessel (RPV) to achieve stable positioning of the entire equipment on the shell. The lifting mechanism 20 is suspended on the shell by being disposed on the support frame 10 and is coaxial with the shell, and can move up and down relative to the support frame 10 and the shell on the central axis of the shell. The rotating mechanism 30 is disposed on the lower part of the lifting mechanism 20 facing the shell, and can move up and down with the lifting mechanism 20, and can also rotate relative to the lifting mechanism 20. The nozzle scanning arm 40 and the two multi-degree-of-freedom robotic arm probe holders 50 are used to perform synchronous and parallel scanning to the shell. The nozzle scanning arm 40 and the two multi-degree-of-freedom robotic arm probe holders 50 are respectively disposed below the rotating mechanism 30, and move up and down and rotate with the rotating mechanism 30 to ensure that the position to be scanned is fully scanned.

Specifically, the support frame 10 may include a connecting bracket 11 and four support legs 12 in its structure. The four support legs 12 are respectively used to stand upright on the flange surface of the shell. The connecting bracket 11 is connected between the four support legs 12 and can span above the flange surface of the shell. Each support leg 12 is arranged with a support sleeve 13 at its lower part, which can be fitted and matched with the guide column on the flange surface.

When the support frame 10 is arranged on the flange face of the shell, the four support legs 12 are distributed at intervals circumferentially along the flange face. The two support legs 12 located at diagonal positions are respectively cooperated with the guide columns on the flange face through the support sleeves 13. The other two support legs 12 can be connected to the flange holes on the flange face through their respective support sleeves 13, and can be further locked with bolts.

In a preferred embodiment, the connecting bracket 11 of the support frame 10 is in a " 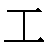 " character shape, and the four free ends located around the perimeter are respectively used to connect the support legs 12.

The lifting mechanism 20 is perpendicular to the connecting bracket 11 and passes through the connecting bracket 11, and the central axis of the lifting mechanism 20 is coaxial with the central axis of the shell. The connecting bracket 11 may be provided with bracket holes to cooperate with the lifting mechanism 20.

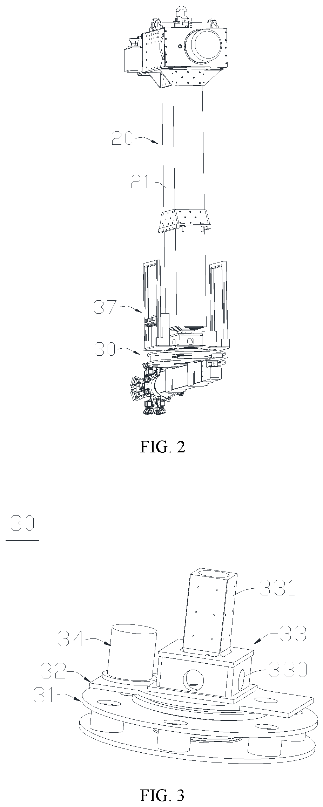

Furthermore, as shown in FIGS. 1 and 2, the lifting mechanism 20 may include a lifting column 21, which is perpendicular to the connecting bracket 11 and passes through the connecting bracket 11. One end (upper end) of the lifting column 21 is located on the upper side of the connecting bracket 11, while the other end (lower end) is located on the lower side of the connecting bracket 11 and faces the inside of the shell.

The lower end of the lifting column 21 can be provided with several sleeves that are connected in sequence. By the relative extension or retraction of the sleeves, the lower end of the lifting column 21 can move up and down by telescoping. The rotating mechanism 30 is disposed at the lower end of the lifting column 21, and can move up and down relative to the support frame 10 and the shell as the lower end of the lifting column 21 extends and retracts.

Corresponding to the extension and retraction of the lower end of the lifting column 21, the lifting mechanism 20 further includes a winching mechanism 22 connected thereto, which pulls up or lowers the sleeve at the lower end of the lifting column 21, so that the lower end of the lifting column 21 performs an extension and retraction action.

The rotating mechanism 30 is disposed on the lower end of the lifting column 21, which is located on the lower side of the connecting bracket 11. In some embodiments, the rotating mechanism 30 includes a rotating disk 31, which can be driven to rotate by a motor or the like. The rotating disk 31 is provided with several mounting holes distributed at intervals for mounting the nozzle scanning arm 40 and the multi-degree-of-freedom robotic arm probe holders 50 under the rotating disk 31. For example, several mounting holes are evenly distributed along the circumference of the rotating disk 31 at intervals, and the nozzle scanning arm 40 can be parallel to the diameter of the rotating disk 31 and is horizontally connected to the bottom of the rotating disk 31 by cooperating with two mounting holes at 180°. Two multi-degree-of-freedom robotic arm probe holders 50 can be connected to the bottom of the rotating disk 31 by cooperating with the mounting holes located on both sides of the nozzle scanning arm 40, and are located on opposite sides of the nozzle scanning arm 40.

Furthermore, as shown in FIGS. 2 to 4, the rotating mechanism 30 also includes a support plate 32, a hollow cable carrier 33, a torque motor 34 with an absolute encoder, and a connecting shell 35. The cable carrier 33 and the connecting shell 35 are connected to opposite sides of the support plate 32, and the support plate 32 is provided with a through hole 320 to connect the cable carrier 33 and the connecting shell 35; the end of the cable carrier 33 away from the support plate 32 is fixedly connected to the lifting column 21, so that the cable carrier 33, the support plate 32 and the connecting shell 35 are fixedly connected to the lower end of the lifting column 21 at the lower end of the lifting column 21.

The upper end of the cable carrier 33 may be connected to or integrally formed with a cylindrical column 331 for fixed connection with the lifting column 21. The cable carrier 33 is a hollow shell structure, and the internal space can be used for cables to pass through and be accommodated. At least one side of the cable carrier 33 is provided with a cable hole 330 that communicates with its internal space for cables to enter and exit the cable carrier 33. The rotating disk 31 is sleeved on the outer periphery of the connecting shell 35 and can rotate relative to the connecting shell 35; the torque motor 34 is disposed on the support plate 32, connected to and driving the rotating disk 31 to rotate.

At least one bearing 36 is sleeved between the rotating disk 31 and the connecting shell 35, to reduce the coefficient of friction between the rotating disk 31 and the connecting shell 35.

The torque motor 34 can be connected to and drive the rotating disk 31 to rotate by gears or the like. The torque motor 34 is equipped with an absolute encoder, which is used to pick up and feed back the rotation angle and rotation speed information of the torque motor 34. The remote control system receives the above information and can process it to obtain the rotation angle and rotation speed of the rotating disk 31, thereby monitoring the rotation angle and rotation speed of the nozzle scanning arm 40 and the multi-degree-of-freedom robotic arm probe holders 50 during scanning.

Furthermore, the support plate 32 is provided with a connection unit 37 integrating several connectors, the connecting cables of the scanning arm 40 and the multi-degree-of-freedom robotic arm probe holders 50 pass through the cable carrier 33 and are connected to the connectors of the connection unit 37. The connection unit 37 is then externally connected to the control system by a connection cable, to connect the inspection arm 40 and the multi-degree-of-freedom robotic arm probe holders 50 to the control system for monitoring, power supply.

The cable carrier 33 in the rotating mechanism 30 prevents the connecting cables of the nozzle scanning arm 40 and the multi-degree-of-freedom robotic arm probe holders 50 from getting tangled or pulled as the rotating disk 31 rotates. The rotating disk 31 is an open disk structure and does not have a closed space. After the rotating mechanism 30 operates inside the pressure vessel, the coolant inside the pressure vessel will not accumulate in structures such as the rotating disk 31 and cable carrier 33, and the accumulation of radioactive materials in them will also be avoided or reduced.

Corresponding to the external connection of the connecting cable on the connection unit 37, the reactor pressure vessel inspection equipment also includes a cable winding and unwinding winch 60 disposed on the lifting mechanism 20. Referring to FIG. 1, the cable winding and unwinding winch 60 can be fixed to the lifting column 21 or the winching mechanism 22. The cable winding and unwinding winch 60 is provided with a cable rack 61 at its lifting end for suspending cables. The connecting cables used for external connection are suspended on the cable rack 61, with one end connected to the connector of the connection unit 37 and the other end used for externally connecting to the control system. The cable winding and unwinding winch 60 and its cable rack 61 make cable laying more convenient. As the lower end of the lifting column 21 extends and retracts, the cable winding and unwinding winch 60 can simultaneously wind up and unwind the cable without causing tangling or pulling problems.

Referring to FIGS. 3, 5 and 6, the nozzle scanning arm 40 is arranged below the rotating disk 31 in the diameter direction of the rotating disk 31, and the two multi-degree-of-freedom robotic arm probe holders 50 are respectively located on both sides of the nozzle scanning arm 40 and arranged below the rotating disk 31.

The nozzle scanning arm 40 may further include a scanning robotic arm 41 disposed below the rotating disk 31, a rotating part 42 rotatably disposed at one end of the scanning robotic arm 41, and a number of scanning assemblies 43 disposed on the rotating part 42. The scanning robotic arm 41 can move back and forth in the radial direction of the shell of the pressure vessel relative to the rotating disk 31, thereby driving the rotating part 42 and the scanning assembly 43 at the end of the scanning robotic arm 41 to move back and forth in the radial direction.

The back-and-forth movement of the scanning robotic arm 41 can be achieved through telescopic movement. The scanning robotic arm 41 can be fixed below the rotating disk 31 through the cooperation of at least one suspension bracket 44 with a mounting hole. The rotating part 42 can rotates at the end of the scanning robotic arm 41 by a driving member such as a motor. Preferably, a number of scanning assemblies 43 may be distributed along the circumference of the rotating part 42 on the outer peripheral surface of the rotating part 42. The scanning assembly 43 may include a camera, a ranging probe and so on.

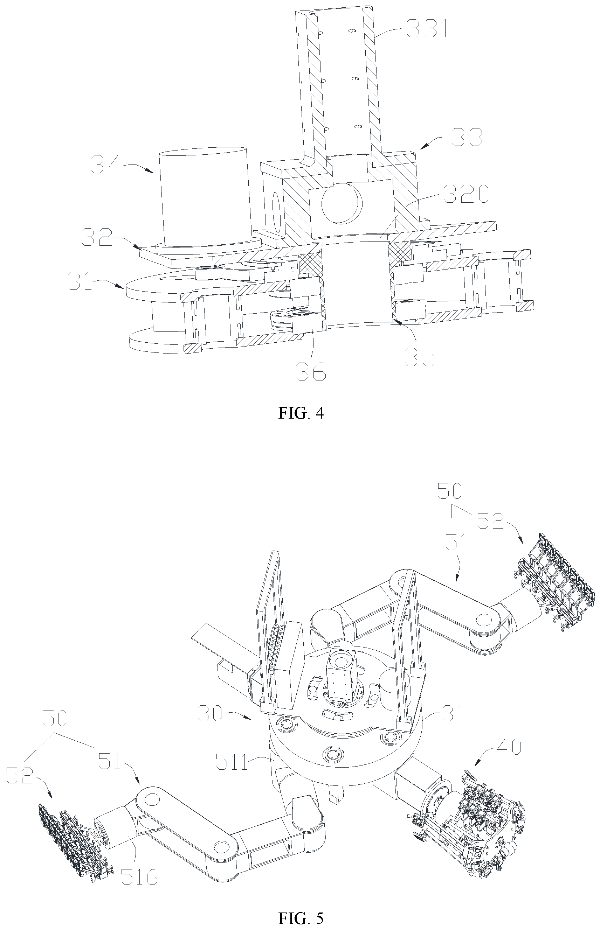

As shown in FIG. 5, the multi-degree-of-freedom robotic arm probe holder 50 may further include a six-degree-of-freedom robotic arm 51 (also known as a six-axis robotic arm) and a probe holder 52.

The six-degree-of freedom robotic arm 51 is parallel to the central axis of the shell of the reactor pressure vessel with its first joint 511 and arranged below the rotating mechanism 30 (rotating disk 31) through a first quick-assembly structure. The probe holder 52 is detachably arranged on the sixth joint 516 of the six-degree-of-freedom robotic arm 51 away from the rotating mechanism 30 through a second quick-assembly structure.

The first quick-assembly structure facilitates the rapid assembly and disassembly of the six-degree-of-freedom robotic arm 51 in the RPV water tank; the second quick-assembly structure facilitates the rapid assembly and disassembly of the probe holder 52 from the six-degree-of-freedom robotic arm 51 in the RPV water tank. The above-mentioned quick assembly and disassembly can be completed in one go, and all RPV inspection items can be performed without the equipment needing to discharge water. The inspection of the nozzle parts, which accounts for 70% of the inspection workload, is completed by the nozzle scanning arm 40 and the multi-degree-of-freedom robotic arm probe holder 50, and the two can perform inspection simultaneously and in parallel, which greatly reduces the inspection time and improves work efficiency.

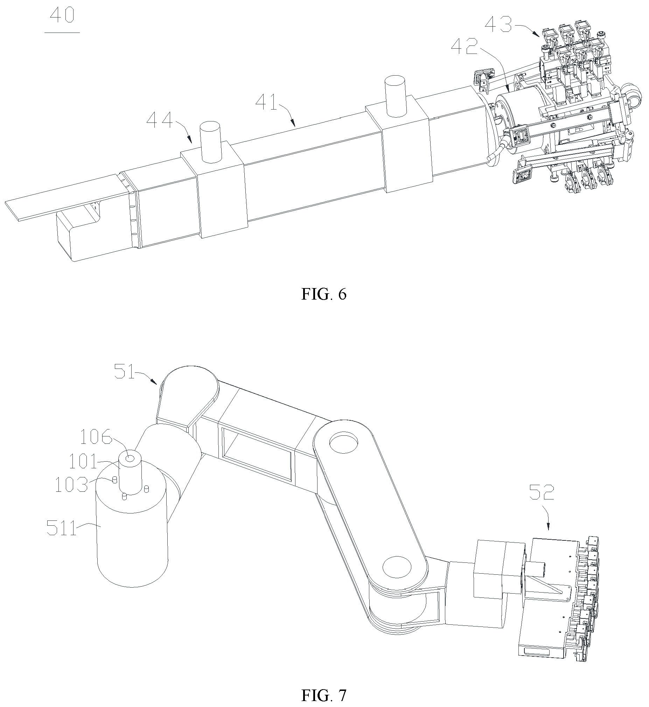

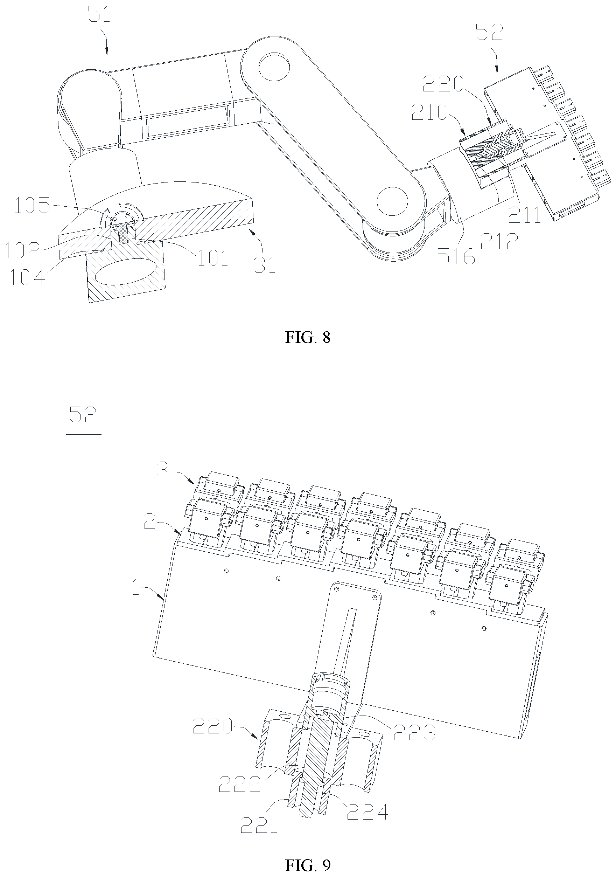

Referring to FIGS. 7 and 8, in some embodiments, the first quick-assembly structure includes a positioning column 101, a positioning hole 102 adapted to the positioning column 101, a positioning pin 103, a pin hole 104 adapted to the positioning pin 103, and a locking member 105.

The positioning column 101 is disposed on the first joint 511 of the six-degree-of-freedom robotic arm 51, and the positioning hole 102 is disposed on the rotating disk 31 of the rotating mechanism 30. When the six-degree-of-freedom robotic arm 51 is mated with the rotating disk 31, the positioning column 101 is inserted into the positioning hole 102. The positioning column 101 is also provided with a threaded hole 106 for cooperating with the locking member 105. The positioning hole 102 is achieved by the mounting hole on the rotating disk 31.

The positioning pin 103 protrudes on the first joint 511 and is located on at least one side of the positioning column 101. The positioning pin 103 is smaller than the positioning column 101 in height, i.e., diameter, and is mainly used for alignment before the positioning column 101 and the positioning hole 102 are connected. The pin hole 104 is disposed on the rotating disk 31 and located on at least one side of the positioning hole 102 for the insertion of the positioning pin 103.

When the six-degree-of-freedom robotic arm 51 is mated with the rotating disk 31, the positioning pin 103 is aligned with the pin hole 104 to confirm the arrangement direction of the six-degree-of-freedom robotic arm 51. The positioning column 101 is inserted from one side of the positioning hole 102 and fitted into the positioning hole 102, while the positioning pin 103 is fitted into the pin hole 104. The locking member 105 is inserted from the other side of the positioning hole 102 and fastened in the threaded hole 106 of the positioning column 101. The locking element 105 may be, but is not limited to, a bolt.

Referring to FIGS. 8 and 9, in some embodiments, the second quick-assembly structure includes a first connecting seat 210 disposed on the sixth joint 516 of the six-degree-of-freedom robotic arm 51, a second connecting seat 220 disposed on the probe holder 52, and a mating assembly.

The first connecting seat 210 is provided with a mating hole 211 and a screw hole 212 that are axially connected; the inner diameter of the mating hole 211 is larger than that of the screw hole 212, and the mating hole 211 penetrates through one end of the first connecting seat 210, while the screw hole 212 penetrates through the opposite end of the first connecting seat 210.

The second connecting seat 220 is provided with a mating column 221 on one side that is adapted to the mating hole 211. The second connecting seat 220 is also provided with a central channel 222 that penetrates through to the mating column 221. The central channel 222 includes a first channel that penetrates through the second connecting seat 220 and a second channel that penetrates through the mating column 221. A protruding platform is arranged on the connection between the first channel and the second channel. The mating assembly is inserted into the central channel 222 and can move and rotate axially relative to the central channel 222.

The mating assembly may specifically include a rotating operating part 223 and a screw 224 that are axially connected; the diameter of the rotating operating part 223 is larger than the diameter of the screw 224, and the rotating operating part 223 can cooperate with the first channel of the central channel 222 to enter and exit the first channel. The screw 224 can be inserted into the first channel and the second channel, and moves back and forth in the central channel 222 as the rotating operating part 223 enters and exits the first channel. The end of the screw 224 away from the rotating operating part 223 is confined within the second channel by cooperating with the protruding platform. When the rotating operating part 223 moves back and forth along the axial direction of the central channel 222, the end of the screw 224 can extend out of the second channel or retract into the second channel.

When the first connecting seat 210 and the second connecting seat 220 are mated, the mating column 221 is fitted into the mating hole 211 in a plug-in manner, and the mating assembly faces the screw hole 212 of the first connecting seat 210 by the screw 224. At this time, the initial connection of the first connecting seat 210 and the second connecting seat 220 can be completed. By the rotation of the rotating operating part 223, the screw 224 is locked in the screw hole 212. At the same time, with the rotation of the rotating operating part 223 and the cooperation of the screw 224 and the screw hole 212, the rotation is converted into the axial movement of the mating assembly until the screw 224 is locked in place in the screw hole 212, so that the first connecting seat 210 and the second connecting seat 220 are mated and fixed.

In the second quick-assembly structure, the rotating operating part 223 is a cylindrical structure with an internal concave-convex structure for cooperating with the operating end of the long rod tool, so that the operator can enter the RPV water tank from outside the pressure vessel through the long rod tool to quickly assemble and disassemble the probe holder 52 on the six-degree-of-freedom robotic arm 51.

The probe holder 52 can be implemented using existing technologies. Alternatively, to reduce the workload of on-site foreign object prevention, and thus reduce the time and radiation dose to personnel caused by foreign object prevention inspections, probe holder 52 adopts a probe holder with foreign object prevention function.

As shown in FIGS. 9-11, the probe holder 52 includes a protective cover 1, a probe support 2, and several probe assemblies 3; each probe assembly 3 includes an ultrasonic probe 300 with at least two degrees of freedom of motion.

One end of the protective cover 1 is open, and the probe support 2 is fitted inside the open end of the protective cover 1 to close the open end. Furthermore, the probe support 2 is provided with several channel holes 201 that penetrate the opposite ends of the probe support 2 and communicate with the internal space of the protective cover 1; one channel hole 201 is used to insert a probe assembly 3, and the probe assembly 3 can move back and forth along the channel hole 201 relative to the protective cover 1 and the probe support 2 in the direction of entering and exiting the protective cover 1.

On the probe support 2, several channel holes 201 are arranged along the length direction of the probe support 2, and can form one row, two rows or more.

The probe support 2 is preferably detachably fitted to the open end of the protective cover 1, which facilitates the disassembly, assembly, replacement, and maintenance of the probe assembly 3.

Each probe assembly 3 may include an ultrasonic probe 300, a probe slide rod 301, and a probe frame 302. The probe slide rod 301 has a first end and a second end relative to each other. The first end of the probe slide rod 301 passes through the channel hole 201 and can move back and forth along the channel hole 201 in the direction of entering and exiting the protective cover 1. The probe frame 302 is rotatably disposed on the second end of the probe slide rod 301 by a rotating assembly or the like, and the ultrasonic probe 300 is disposed on the probe frame 302 by a rotating shaft or the like and is rotatable relative to the probe frame 302.

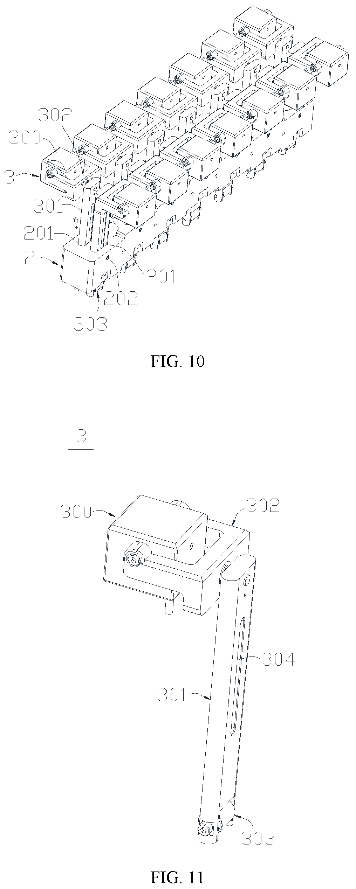

The probe holder 52 shown in FIGS. 9 and 10 is positioned with the ultrasonic probe 300 facing upwards, the probe slide rod 301 can move up and down relative to the protective cover 1 and the probe support 2, which in turn causes the probe frame 302 and the ultrasonic probe 300 on its second end to move up and down as well.

A limiting pin 202 can also be provided between the probe slide rod 301 and the probe support 2 to constrain the movement stroke of the probe slide rod 301. The limiting pin 202 is fixed inside the probe support 2 and passes through or is fitted at one end into the limiting groove 304 opened on the probe slide rod 301. When the probe slide rod 301 moves up and down in the channel hole 201, the limiting pin 202 also moves in the limiting groove 304. When the limiting pin abuts against the upper end or lower end of the limiting groove 304, it restricts the probe slide rod 301 from continuing to move in the current direction, thereby achieving the effect of constraining the movement stroke of the probe slide rod 301.

The rotation direction of the probe frame 302 relative to the probe slide rod 301 and the rotation direction of the ultrasonic probe 300 relative to the probe frame 302 are in two perpendicular and orthogonal directions. The rotation of the probe frame 302 also drives the ultrasonic probe 300 to rotate relative to the probe slide rod 301, so that the ultrasonic probe 300 has two perpendicular and orthogonal rotational degrees of freedom on the probe slide rod 301, ensuring that the ultrasonic probe 300 fits the position to be scanned. Combined with the back-and-forth movement of the probe slide rod 301, the ultrasonic probe 300 has three degrees of freedom of motion.

The probe assembly 3 also includes a constant force spring 303; the constant force spring 303 is disposed at the first end of the probe slide rod 301 and connected to the probe support 2, so that the probe slide rod 301 has a constant tendency force to move outward in the direction of the protective cover 1.

In the aforementioned probe holder 52, a protective cover 1 is provided to form a covered space to accommodate the probe support 2 and the lower structure of the probe assembly 3, thereby reducing the number of exposed external parts and thus reducing the difficulty of preventing foreign objects from entering.

A bracket is provided on the side of the protective cover 1 for connecting to the six-degree-of-freedom robotic arm 51, and the second connecting seat 220 of the second quick-assembly structure is disposed on the bracket.

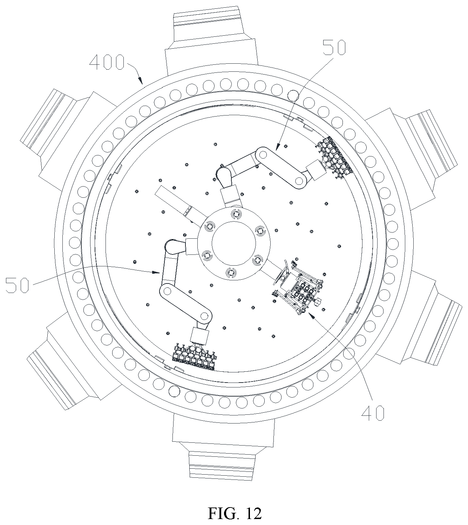

The reactor pressure vessel inspection method implemented by the reactor pressure vessel inspection equipment of the present invention, referring to FIGS. 1 and 12, may include the following steps:
S1. arranging the reactor pressure vessel inspection equipment on the flange face of the shell 400 of the pressure vessel.
S2. activating the lifting mechanism 20 of the reactor pressure vessel inspection equipment, and lowering the nozzle scanning arm 40 and the two multi-degree-of-freedom robotic arm probe holders 50 to the position to be scanned inside the shell 400.
S3. the nozzle scanning arm 40 and the two multi-degree-of-freedom robotic arm probe holders 50 perform synchronous and parallel scanning.

The positions to be scanned within the shell 400 of the pressure vessel include: the flange threaded hole at the top flange face of the shell, the flange ligament area, the weld connecting the flange and the nozzle section (S/C200 girth weld), the weld connecting the water inlet nozzle and the shell (water inlet SET-IN weld), the weld at the safe end of the inlet nozzle (nozzle and safe end, safe end and primary piping), the extended section of the inner radius of the water inlet nozzle, the weld at the safe end of the outlet nozzle (nozzle and safe end, safe end and primary piping), the extended section of the inner radius of the water outlet nozzle, the weld connecting the water outlet nozzle and the shell (water outlet SET-IN weld), the inner radius of the water outlet (R19 inner radius), the girth weld connecting the nozzle section and the shell section (S/C201 girth weld), the core high-flux region, the shell section connecting girth weld (S/C202 girth weld), and the bottom head girth weld (S/C204 weld), and so on.

The scanning positions of the nozzle scanning arm 40 include at least one of the following: the weld at the safe end of the water inlet nozzle, the weld at the safe end of the water outlet nozzle, the weld connecting the safe end and primary piping, the extended section of inner radius of the water inlet nozzle, the extended section of the inner radius of the water outlet nozzle, the nozzle side of the weld connecting water inlet nozzle and the shell, the nozzle side of the weld connecting water outlet nozzle and the shell, the cladding of the water inlet nozzle, the cladding of the water outlet nozzle, the inner radius of the water inlet nozzle (excluding R19 inner radius), and the inner radius of the water outlet nozzle (excluding R19 inner radius).

The scanning positions of the multi-degree-of-freedom robotic arm probe holder 50 include at least one of the following: the shell side of the weld connecting water inlet nozzle and the shell, the shell side of the weld connecting water outlet nozzle and the shell, the inner radius of the water outlet nozzle (R19 inner radius), the shell girth weld, the bottom head girth weld, the core high-flux region, the flange threaded hole and the flange ligament area.

The above description is merely embodiments of the present invention and does not limit the patent scope of the present invention. Any equivalent structural or procedural transformations made based on the content of the specification and drawings of the present invention, or direct or indirect applications in other related technical fields, are similarly included within the patent protection scope of the present invention.

## Claims

1. A reactor pressure vessel inspection equipment, **characterized in** comprising a support frame for arranging on the flange face of the shell of the pressure vessel, a lifting mechanism disposed on the support frame and coaxial with the shell, a rotating mechanism disposed on the lower part of the lifting mechanism facing the shell, a nozzle scanning armand two multi-degree-of-freedom robotic arm probe holders disposed below the rotating mechanism;
wherein the lifting mechanism is movable relative to the support frame, driving the rotating mechanism and the nozzle scanning arm and multi-degree-of-freedom robotic arm probe holder on it to move up and down along the central axis of the shell; the rotating mechanism is used to drive the nozzle scanning arm and multi-degree-of-freedom robotic arm probe holder to rotate around the central axis of the shell; the nozzle scanning arm and the two multi-degree-of-freedom robotic arm probe holders are used to perform synchronous parallel scanning to the shell.

2. The reactor pressure vessel inspection equipment according to claim 1, **characterized in that** the support frame comprises four support legs for standing upright on the flange surface of the shell, and a connecting bracket connected between the four support legs and capable of spanning above the flange surface of the shell;
wherein the four support legs are distributed at intervals circumferentially along the flange surface, wherein the two support legs located at diagonal positions are respectively used to cooperate with guide columns on the flange surface.

3. The reactor pressure vessel inspection equipment according to claim 2, **characterized in that** the lifting mechanism comprises a lifting column that is perpendicular to the connecting bracket and passes through the connecting bracket;
wherein the two ends of the lifting column are located on the upper and lower sides of the connecting bracket, respectively; the rotating mechanism is disposed on the lower end of the lifting column located on the lower side of the connecting bracket; the lower end of the lifting column is retractable, which drives the rotating mechanism to move up and down.

4. The reactor pressure vessel inspection equipment according to claim 3, **characterized in that** the rotating mechanism comprises a support plate, a hollow cable carrier, a torque motor with an absolute encoder, a connecting shell, and a rotating disk;
wherein the cable carrier and the connecting shell are connected to opposite sides of the support plate, and the support plate is provided with a through hole to connect the cable carrier and the connecting shell; the end of the cable carrier away from the support plate is fixedly connected to the lifting column; the rotating disk is sleeved on the outer periphery of the connecting shell and can rotate relative to the connecting shell; the torque motor is set on the support plate, connected to and driving the rotating disk to rotate; and
wherein the rotating disk is provided with a number of mounting holes distributed at intervals, respectively used for mounting the nozzle scanning arm and the multi-degree-of-freedom robotic arm probe holder under the rotating disk.

5. The reactor pressure vessel inspection equipment according to claim 4, **characterized in that** at least one side of the cable carrier is provided with a cable hole communicating with its internal space;
wherein the support plate is provided with a connection unit integrating a number of connectors; connecting cables of the nozzle scanning arm and the multi-degree-of-freedom robotic arm probe holder pass through the cable carrier and are connected to the connectors of the connection unit.

6. The reactor pressure vessel inspection equipment according to claim 5, **characterized in that** the reactor pressure vessel inspection equipment further comprises a cable winding and unwinding winch disposed on the lifting mechanism, the lifting end of the cable winding and unwinding winch is provided with a cable rack for suspending the cable, the connecting cable used for external connection is suspended on the cable rack, with one end connected to the connector of the connecting unit, and the other end used for external connection to the control system.

7. The reactor pressure vessel inspection equipment according to claim 1, **characterized in that** the multi-degree-of-freedom robotic arm probe holder comprises a six-degree-of-freedom robotic arm and a probe holder;
wherein the six-degree-of-freedom robotic arm is parallel to the central axis of the shell with its first joint and arranged below the rotating mechanism through a first quick-assembly structure; the probe holder is detachably arranged on the sixth joint of the six-degree-of-freedom robotic arm away from the rotating mechanism through a second quick-assembly structure.

8. The reactor pressure vessel inspection equipment according to claim 7, **characterized in that** the first quick-assembly structure comprises a positioning column disposed on the first joint of the six-degree-of-freedom robotic arm, a positioning hole adapted to the positioning column and disposed on the rotating mechanism, a positioning pin protruding on the first joint and located on at least one side of the positioning column, a pin hole disposed on the rotating mechanism and located on at least one side of the positioning hole, and a locking member; the positioning column is inserted and fitted into the positioning hole from one side of the positioning hole, while the positioning pin is fitted into the pin hole, and the locking member is inserted from another side of the positioning hole and fastened to the positioning column.

9. The reactor pressure vessel inspection equipment according to claim 7, **characterized in that** the second quick-assembly structure comprises a first connecting seat disposed on the sixth joint of the six-degree-of-freedom robotic arm, a second connecting seat disposed on the probe holder, and a mating assembly;
wherein the first connecting seat is provided with a mating hole and a screw hole that are axially connected; one side of the second connecting seat is provided with a mating column that is adapted to the mating hole, and the second connecting seat is also provided with a central channel that penetrates through the mating column; the mating assembly is inserted through the central channel and can move and rotate axially relative to the central channel; the mating assembly comprises a rotating operating part and a screw that are axially connected;
wherein when the first connecting seat and the second connecting seat are mated, the mating column is fitted into the mating hole, and the mating assembly faces the screw hole by the screw, the screw is fitted into the screw hole by rotating the rotating operating part, thereby mating and fixing the first connecting seat and the second connecting seat.

10. The reactor pressure vessel inspection equipment according to claim 7, **characterized in that** the probe holder comprises a protective cover, a probe support, and a number of probe assemblies; each of the probe assemblies comprises an ultrasonic probe with at least two degrees of freedom of motion;
wherein one end of the protective cover is open, and the probe support fits inside the open end of the protective cover to close the open end; and the probe support is provided with a number of channel holes that penetrate through the opposite ends of the probe support and communicate with the internal space of the protective cover; one of the channel holes is used to insert one of the probe assemblies, and the probe assemblies can move back and forth along the channel hole relative to the protective cover and the probe support in the direction of entering and exiting the protective cover.

11. The reactor pressure vessel inspection equipment according to claim 10, **characterized in that** each of the probe assemblies further comprises a probe slide rod and a probe frame, the first end of the probe slide rod passes through one of the channel holes and moves back and forth along one of the channel holes; the probe frame is rotatably disposed on the second end of the probe slide rod, and the ultrasonic probe is disposed on the probe frame and rotatable relative to the probe frame; and/or,
each of the probe assemblies also comprises a constant force spring; the constant force spring is disposed at the first end of the probe slide rod and connected to the probe support, so that the probe slide rod has a constant tendency force to move outward in the direction of the protective cover.

12. The reactor pressure vessel inspection equipment according to any one of claims 1-11, **characterized in that** the nozzle scanning arm comprises an scanning robotic arm disposed below the rotating mechanism and capable of moving back and forth in the radial direction of the shell relative to the rotating mechanism, a rotating part rotatably disposed at one end of the scanning robotic arm, and a number of scanning assemblies disposed on the rotating part.

13. A reactor pressure vessel inspection method, **characterized in that** employing the reactor pressure vessel inspection equipment according to any one of claims 1-12, and the reactor pressure vessel inspection method comprises the following steps:
S1. arranging the reactor pressure vessel inspection equipment on the flange face of the shell of the pressure vessel;
S2. activating the lifting mechanism of the reactor pressure vessel inspection equipment, and lowering the nozzle scanning arm and the two multi-degree-of-freedom robotic arm probe holders to the position to be scanned inside the shell;
S3. the nozzle scanning arm and the two multi-degree-of-freedom robotic arm probe holders perform synchronous and parallel scanning;
wherein the scanning positions of the nozzle scanning arm comprises at least one of the following: the weld at the safe end of the water inlet nozzle, the weld at the safe end of the water outlet nozzle, the extended section of inner radius of the water inlet nozzle, the extended section of the inner radius of the water outlet nozzle, the nozzle side of the weld connecting water inlet nozzle and the shell, the nozzle side of the weld connecting water outlet nozzle and the shell, the cladding of the water inlet nozzle, the cladding of the water outlet nozzle, the inner radius of the water inlet nozzle, and the inner radius of the water outlet nozzle; and
wherein the scanning positions of the multi-degree-of-freedom robotic arm probe holder comprises at least one of the following: the shell side of the weld connecting water inlet nozzle and the shell, the shell side of the weld connecting water outlet nozzle and the shell, the inner radius of the water outlet nozzle, the bottom head girth weld and the core high-flux region.
